**Europäisches Patentamt**

**European Patent Office**

**Office européen des brevets**

(19)

(11) Publication number: **0 144 756**
**A2**

(12) # EUROPEAN PATENT APPLICATION

(21) Application number: **84113294.7**

(22) Date of filing: **05.11.84**

(51) Int. Cl.⁴: **F 16 D 3/52**
**F 16 D 3/78**

(30) Priority: **28.11.83 IT 2390583**

(43) Date of publication of application:
**19.06.85 Bulletin 85/25**

(84) Designated Contracting States:
**AT DE FR GB NL SE**

(71) Applicant: **INDUSTRIE PIRELLI S.p.A.**
**Piazzale Cadorna, 5**
**I-20123 Milan(IT)**

(72) Inventor: **Tangorra, Giorgio**
**Via Ramazzotti, 12**
**Monza (Milan)(IT)**

(74) Representative: **Mariani, Giorgio, Dr. et al,**
**INDUSTRIE PIRELLI S.p.A. Direzione Brevetti Piazzale**
**Cadorna, 5**
**I-20123 Milano(IT)**

(54) **Joint for the transmission of motion from a driving shaft to a driven shaft.**

(57) Elastic joint (1) for the transmission of motion between two shafts comprising two supports, a driving support (2) and a driven support (3), associated to the shafts and a least two arms for each support. The joint comprises at least one single element for connecting the two arms (5, 6, 7, 8), said element is in the form of a closed annular strap (4) of inextensible and flexible material. The strap can be disposed on a plane separating the two supports at a position substantially central to the joint so as to form a polygon whose vertices are the ends of the arms belonging alternatively to the driving support and driven support.

EP 0 144 756 A2

## JOINT FOR THE TRANSMISSION OF MOTION FROM A DRIVING SHAFT TO A DRIVEN SHAFT

### S P E C I F I C A T I O N

The present invention is directed to a joint for the transmission of motion between a driving shaft and a driven shaft and more precisely and among other things to a joint of elastic type.

As known, an elastic joint must do the following tasks:

a) to allow the connected shafts to undergo the relative inclinations;

b) to permit small relative parallel movements;

c) to permit a limited liberty of relative axial movements;

d) to permit relative rotations of the two shafts on varying of the transmitted torque, in order to transmit the sudden load variations from the driving shaft to the driven shaft in an attenuated manner.

According to one example, an elastic joint can be constituted by a polygonal element formed by rubber blocks where each polygonal element is provided with bushes at its ends; in this case the driving shaft and the driven shaft are connected alternatively to the bushes inserted in the rubber polygonal elements.

This type of joint and other like ones based substantially on the use of elastomeric material are apt for instance to realize a power transmission between a driving shaft and a driven shaft graduating the torques and the torque variations from the driving shaft with respect to the driven shaft through a variation of the condition of deformation of the rubber blocks.

According to another solution, an elastic joint is constituted mainly by a rubber disc provided with bushings for the passage of the bolts of two spiders connected respectively to the driving shaft and to the driven shaft.

Each bushing is connected to each one of the adjacent bushings through a grommet embedded in the disc rubber; preferably said grommet is folded upon itself so as to take an eight-like shape.

This solution can produce in some cases the drawback of an insufficient covering of the grommet with elastomeric material and further the drawback of. a complicated and laborious step for assembling the various elements forming the joint. Then, it is to be noted that the cited solutions can cause high hysteretic losses owing to the presence of the elastomeric material having a considerable thickness with the consequence of reducing the value of the useful power to be transmitted between driving shaft and driven shaft especially in the presence of strong misalignment between the shafts.

Therefore the present invention aims at providing a joint for the transmission of motion between a driving shaft and a driven shaft apt to satisfy the requisites of the elastic joints and at the same time which is constituted by the smallest possible number of useful elements for the transmission of motion between the driving and driven shafts, which is of easy and rapid assembling so as to be manufactured on industrial scale at low costs and at high efficiency in the power transmission.

The object of the present invention is a joint for the transmission of motion from a driving shaft rotating around a first axis to a driven shaft rotating around a second axis, said joint comprising two supports, a driving one and a driven one, associated to said shafts, each support comprising at least two arms, said joint being characterized by the fact of comprising at least one single element for the connection between the arms for the transmission of motion between the shafts constituted in the form of a closed annular strap of flexible material and resistant to traction, said strap being arranged on a plane separating the two supports, at a central position to the joint so as to form a polygon whose vertices are the ends of the arms belonging alternatively to the driven and driving supports and whose sides constitute the tension rods for the transmission of motion between the driven shaft and the driving shaft, said tension rods being during the operation equal to the half of the polygon sides, following alternatively sides under traction and inactive sides and the traction condition exchanging with the inactivity condition on varying of the sign of the transmitted torque.

The present invention will be better understood by the following detailed description made by way of non-limiting example with reference to the figures of the attached sheets of drawing in which:

- figure 1 is a perspective view of the part relating to the supports of a joint realized according to the invention in the form of two arms for each support in which the polygon enveloping the element for the connection between the supports is schematized with a broken line;

- figure 2 shows in a front view according to the arrow $F_1$ of figure 1 a complete view of the joint comprising the connecting element in the form of a polygon connecting arms belonging alternatively to the driven and driving supports;

- figure 3 is a perspective view of the joint;

- figure 4 is a perspective view of the strap, in the manufacturing shape as a cylindrical ring, apt to the formation of the polygonal system of the tensions rods of figure 2;

- figure 5 is a perspective view of the arrangement of the strap represented in figure 4 at the ends of the arms of the supports;

- figure 6 shows the end of the arms of the supports after the assembling of the annular element of figure 4;

4

0144756

- figure 7 shows in perspective view the scheme of the supports for an alternative embodiment of the joint with constant angular velocity according to the invention;
- figure 8 shows some details of the supports of figure 6 according to some embodiments;
- figures from 9 to 13 show the operations for transforming a strap in the form of a ring into a polygonal system whose sides constitute the tension rods of the joint according to the invention;
- figure 14 is a partial view of a hexagonal polygonal system of tension rods apt to constitute the system of tension rods for a joint according to the invention;
- figure 15 shows the outer development of the polygonal joint to determine the tube apt to manufacture a plurality of cylindrical annular straps for various joints according to the invention.

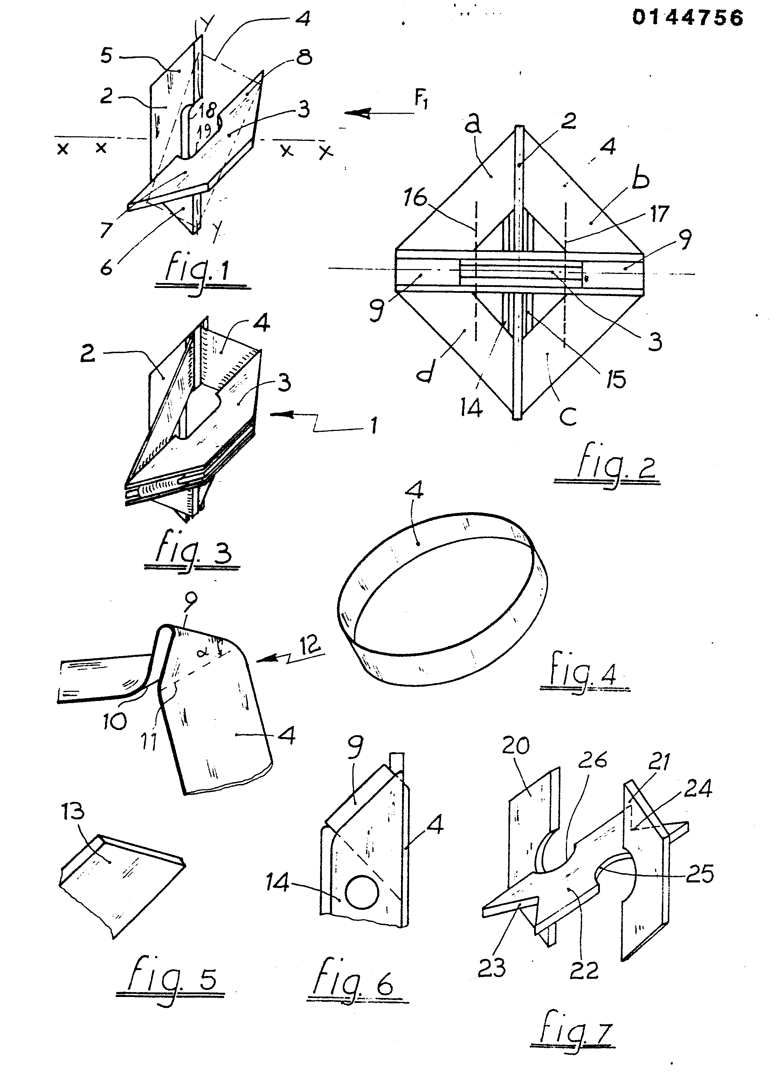

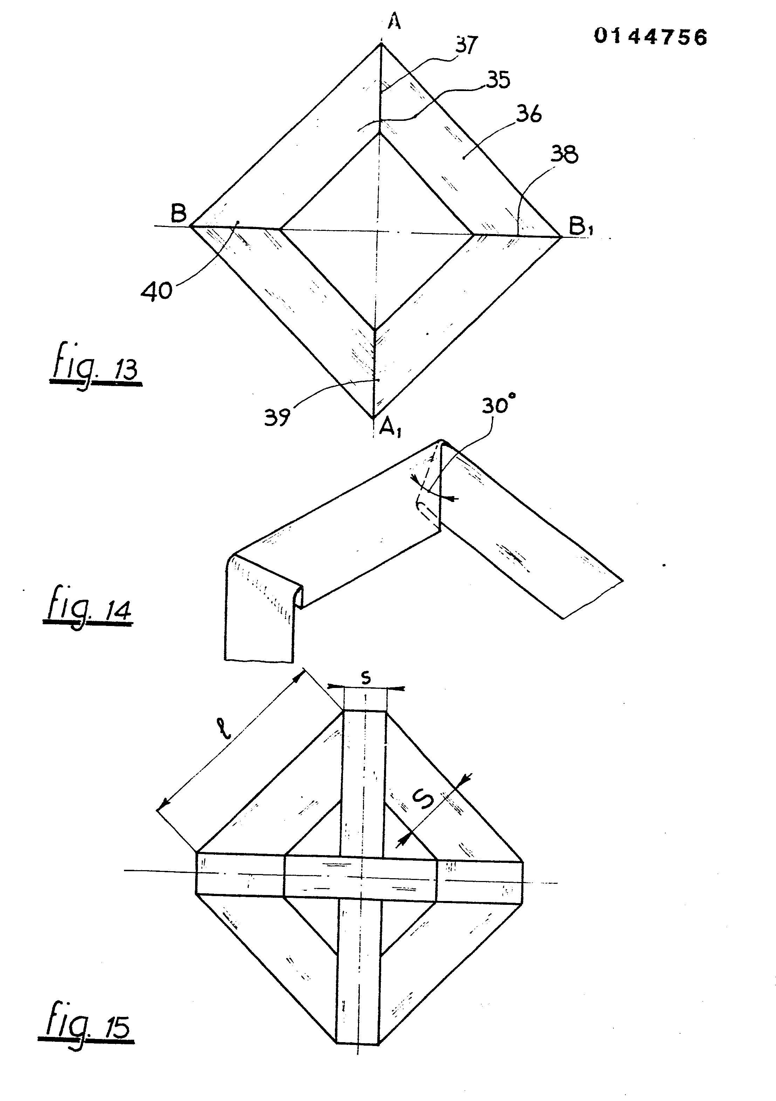

Figures 1, 2, and 3 represent a joint 1 for the transmission of motion from a driving shaft rotating around an axis X-X to a driven shaft rotating around an axis Y-Y.

The joint 1 comprises two supports 2, 3 (in the embodiment of figure 1 in a flat shape), a driving support and a driven support respectively, defined by lying middle planes perpendicular to one another and in one possible realisation a single continuous element 4 for the transmission of motion from one support to the other.

Each support is realized with a rigid material, for instance steel, and comprises two parts here called arms, aligned to one another and indicated in the figure with 5, 6, 7, 8, respectively.

In the present description as single element apt to the transmission, it is intended to indicate a continuous element constituted in the form of a cylindrical ring or sleeve of flexible material and resistant to traction, for instance a thin strap of elastomeric material embedding reinforcing elongate elements, as threads, filaments, textile and metallic cords.

The annular strap is disposed between the supports (figure 2) so as to form a sequence of sides 4 in the example of the figure, connecting to one another alternatively the ends of the arms of the driving support with the ends of the arms of the driven support to constitute thus a polygonal system of useful tension rods for the transmission of motion between the shafts.

The application of the strap to determine the system of tension rods constitutes a particularly advantageous essential characteristic of the invention. In fact it is possible to determine the connection between the two supports with the only strap obtained with easy manufacturing processes: the whole without cutting the strap itself into various segments in a number equal to the tension rods in order to then connect and block them to the bearing structure of the joint.

In this connection the joint comprises means for coupling and blocking the annular strap at the end of each arm.

In a preferred embodiment said means for blocking and coupling the strap to the joint structure are obtained as schematically shown in the figure 5 relating to the connection of the strap with one of the ends of any whatsoever of the two joint supports.

In practice the strap 4 shown in figure 4 in its original shape, is folded upon itself so as to form a folding edge 9 from which two sides project. Then the two sides of the strap are placed under rotation around the second edges 10 and 11 in a plane substantially perpendicular to the overlapping plane (figure 5).

The angle of inclination $\alpha$ between the edge 9 and the edge 10 and between the edge 9 and the edge 11 is substantially of 45°.

Thus there is obtained a part 12 of the strap formed substantially by two equal right-angled triangles having one common side formed by the connecting edge 9.

Then the portion 12 of the strap formed by the two cited equal triangles, is fitted around the chamfer at the end 13 of the support illustrated in the underlying position of figure 5.

In a further assembling step two rigid elements 14, 15 of equal shape (figures 2 and 6) are associated to the support so as to clamp the chamfering part of the support and the strap fitting around said chamfering part.

The blocking of the lateral portion of the strap is subsequently made permanent for the fact that the plates 14, 15 are tightened together by nut and bolt systems, which are schematized with the lines 16, 17 in figure 2; the bolts pass to a zone outer to the run of the annular strap around the support chamfer in a suitable way.

As shown in figure 2, the joint is practically formed by a quadrilateral with sides a, b, c, d whose resistance to traction permits the transmission of motion between two supports 2 and 3 and therefore between the driving shaft and the driven shaft.

The system of tension rods forming the quadrilateral obtained by following the construction visible in the figures 4, 5 and 6 lies completely on a single plane of separation between the supports 2 and 3.

In the transmission of motion when the torque is transmitted from one shaft to the other in a given direction the opposite sides a and c will act under traction, while the opposite sides b and d will act for the torque transmitted in opposite direction.

The joint 1 comprises further means for avoiding mechanical interferences between the portions of the supports 2 and 3 in the movements that the two driving and driven shafts suffer during the operation.

Said means are in the form of grooves 18 and 19 (figure 1) at the center of the supports in order to avoid possible mechanical interferences owing to relative approachings between the driving and driven shafts.

The joint according to the invention can be also realized according to alternative embodiments which permit to obtain a homokinetic transmission between the driving shaft and the driven shaft.

Said alternative embodiments comprise in practice two coupled joints , each of which is equal to that of figure 1 with the difference that the two supports facing the middle part are in a single intermediate rigid support.

In particular according to one embodiment, the supporting elements of the joint with constant angular velocity according to the invention are represented in figure 7 in the condition of aligned driving and driven shafts and comprise two end supports 20 and 21 whose middle sections lie in said alignment condition on a single plane and a rigid support 22 whose middle section lies on a plane perpendicular to the plane of the two end supports.

In this case, the intermediate support comprises two forks 23, 24 for the polygonal windings, two central grooves 25, 26 to avoid mechanical interferences.

On the whole, the joint makes use of two annular elements which form two polygonal systems of tension rods completely equal to those already represented in the previous figures.

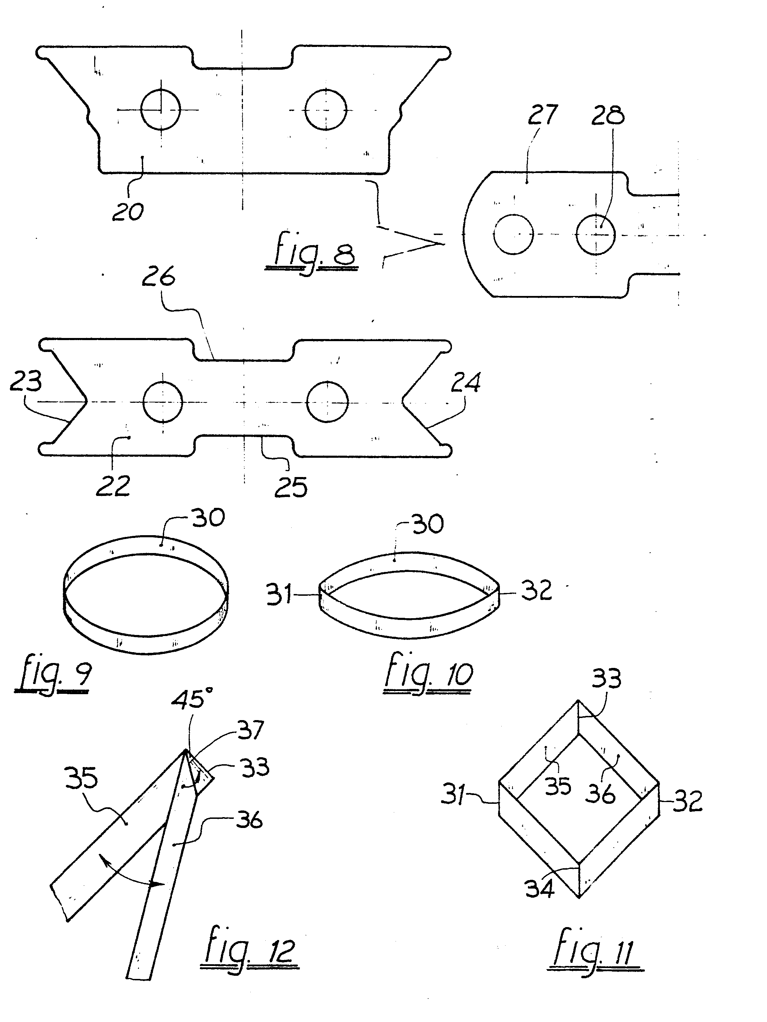

Two blocking plates 27 act on the intermediate support, one of said plates is represented in the figure 8; the plate 27 is provided with holes 28 suitable to receive the screws for blocking the windings of the strap which involve the forks of the intermediate support.

The invention comprises further embodiments of the joint in particular in respect of the formation of the single or double annular element for the connection between the driving support and the driven support.

By way of example, some solutions are now schematized in the figures from 9 to 13 in which for sake of clearness, steps which illustrate the coupling system between annular elements and supports are described separately according to a sequence; as shown said coupling being realized by starting from an annular element formed by a strap 30, as that of figure 9, originates in an automatic manner the assembling steps of the joint.

The assembling steps of the single connecting element between the joint supports according to the present invention could be carried out as follows.

- Four equally spaced edges are defined along the ring, for instance in this way:
  - the cylindrical strap 30 is folded so that the area enclosed by its contour is nullified obtaining thus two folding edges 31, 32 as shown in figure 10;
  - the strap is expanded again and the step is repeated forming two new edges 33 and 34 (figure 11) so that the two edges 31 and 32 face each other; in this way there is obtained in practice a quadrilateral with four equal sides as shown in the top perspective view of figure 11.

Next the zones adjacent to said edges are prepared for being coupled with the supporting elements; said transformation is shown in respect of the edge 33 to which the sides 35 and 36 of the annular element converge.

The transformation is carried out with the following steps which for sake of simplicity are referred to an angle $\alpha$ (figure 5) of 45°:

- at first a further edge 37 is formed on two sides of the strap forming an angle of 45° with the edge 33 (figure 11) and forming a right-angled triangle at the end of the annular element;
- the step for the formation of further edges 38, 39, 40 inclined of 45° with respect to the edges of figure 11 indicated with 32, 34, 31, respectively, is repeated.
- at this point the portions 35 and 36 referred to the edge 33 (figure 12) are laid and likewise the other portions of the annular elements are laid on one same plane so as to obtain the four branches for the connection with the arms of the supports as represented in figure 13.

The triangular portions formed at the vertex zone of the quadrilateral of figure 13 result to be arranged on perpendicular planes to the plane of figure, intersecting said plane according to the edges 37, 38, 39 and 40 of figure 13.

Thus there is obtained the transformation of the cylindrical sleeve of figure 9 into a coplanar system of sides of a quadrilateral as shown in the figure 13, forming the continuous element of connection with the arms of the driving and driven supports.

This polygonal system has four triangular zones which in the figure are called A, B, $A_1$, $B_1$.

The joint is obtained by fixing the opposite triangular portions A and $A_1$ to a support, for instance the driving support and the triangular portions B and $B_1$ on the second support, at 90° with respect to the first one.

The portions A and $A_1$ can be above the plane of figure and the portions B and $B_1$ below the same plane in order to facilitate the connection to the supports.

The anchoring of the triangular portion to the supporting element can be realized for instance by forming this latter in three different pieces; for instance in the case of the joint with constant angular velocity the central piece is like the one 22 of figure 8 on which the triangular portions of the two annular elements are arranged and the further pieces are constituted by other two elements as the 27 one of figure 8 disposed one for part with respect to the central element.

The three elements 27, 22, 27 are then firmly connected to one another, for instance having holes communicating to one another crossed by clamping bolts.

Of course the invention is not limited to that which is said up to now and i.e. to the two supports, each provided with two opposite arms connected to each other by a quadrilateral polygonal system. For instance according to a further embodiment each support can be provided with three arms at 120° and the system of tension rods is obtained again by starting from a flexible strip resistant to traction constituted in the form of a sleeve and folded so as to realize a hexagonal polygonal element.

The realization is schematically shown in the sketch of figure 14. As shown in the figure, in order to obtain a hexagonal polygonal system, the triangular portion for the coupling with the supporting element is characterized by an angle at the vertex of 30° instead of 45° as in the previous example of quadrilateral element.

In this case the six triangular portions are alternatively connected to the driving and driven supports so as to realize a three arms arrangement at 120° on the driving support -coupled with an analogous three arms arrangement at 120° on the driven support.

The present invention includes in its principle further solutions in which for instance one same joint comprises more than one strap.

In one embodiment it is possible that each of the polygon sides is formed by a single strap, orginally shaped according to an annular configuration and then disposed at the ends with the previously shown foldings.

In this embodiment the joint of figure 1 should be constituted by four annular straps instead of onely one annular strap.

More generally, in this and in other embodiments each side of the polygon is formed by a single annular strap.

Of course also in these embodiments the furthermost parts of the strap are formed according to a triangular shape in order to permit the fitting around the chamfer of the supports.

The invention reaches the aimed purposes.

In fact, as it is seen from that which is said and represented, the essential characteristic of the invention is determined by the presence of at least one strap that before being mounted on the joint has a tubular shape and then is connected to the arms of the supports so as to realize branches of connection with said arms lying on a plane according to a regular polygonal arrangement, for instance a quadrilateral as that of figures 1 and 2, said plane coinciding with the ideal plane of separation of the two supports.

0144756

Through said way of connection between the supports, it is possible to have both relative approaching movements and separating movements of said supports and consequently of the relative shafts, as well as relative inclinations between the axes of the driving and driven shafts; in fact, considering the high flexibility of the strap 4, the branches a, b, c, d (figure 2) are connected to the ends of the arms by means of connections assimilable to hinges with consequent possible rotations of the branches with respect to the supports as it could happen for instance when the support 3 gets near the support 2 or also for instance when the axis X-X is no longer aligned with the axis Y-Y.

Further, since the strap has per se a certain, even if modest extensibility, it is possible to have small relative parallel movements between the shafts and also small relative rotations of a shaft with respect to the other on varying of the torque to be transmitted so as to absorb elastically the transients of load transmitted by a shaft to the other.

In particular according to one of the possible solutions of the invention to increase the extensibility of the strap it is possible to use reinforcing elements constituted by high twist nylon cords.

Therefore, owing to the cited characteristics, the joint of the invention is an elastic joint.

The joint according to the invention, with respect to the known elastic joints, has the advantage of not undergoing rubber hysteresis losses with consequent heating.

In fact, in the shown joint, the part apt to bear the stresses to be transmitted between one support and the other is constituted by resistant and flexible elements in the form of cords of thin elements of high tensile strength polymeric material with reduced thicknesses, consequently the hysteresis losses are practically negligible.

Further the cost of the manufacturing process of the present joint is low and the joint is assembled in all its parts rapidly.

In fact according to an advantageous solution, the supports can be realized in series, for instance through a moulding operation, and then with simple tools it is possible to provide the formation of the holes to connect the various plates to one another and to block the tension rods on the supports.

Also the connecting annular element for the transmission of motion between the supports can be obtained by means of a sleeve manufacturing process apt to the contemporaneous formation of a plurality of elements.

In fact if the joint shown in the figures of the present specification is examined, the outer development of the ring (figure 2) is determined by the formula:

$$P = 4 \times 1 + 4 \times s$$

where:

- 1 = is the length of the branches between the ends of the supports;
- s = is the portion of the polygonal system, corresponding to the thickness of the support;
- P = is the outer development of the polygonal system.

Once the torque to be transmitted between the two shafts and the length of the arms of the supports have been determined, as well as the width of the strap resistant section , it is possible to obtain rapidly from the geometrical figure of the joint the development of the polygonal system P.

Said development P, as far as previously seen, corresponds to the construction line of the thin strap in the form of a sleeve; when said sleeve has been defined it is possible to proceed to the formation of a continuous tube to then realize a plurality of cuts perpendicular to the axis of the tube with distance equal to the pre-chosen width S of the branches for the transmission of power in the joint.

Since the tube has an indefinite length and can be produced with manufacturing and vulcanizing systems according to known techniques, permits to realize on industrial scale the essential element for the transmission of motion for a plurality of joints of one same type or also of different types on condition that with equal development the cut distance and the width of the annular elements are modified.

The invention is not limited to that which is described up to now. In fact according to a possible solution the strap in the annular form can be manufactured with different materials. In the case in which it is necessary to make recourse to joints with elasticity or maximum torque different from one another, it is possible to form tubes of the type previously described of polymeric material embedding cords of different type or differently wound on the tube itself, in order to modify the winding density.

To increase the inextensibility of the annular strap it is possible to use reinforcing cords of Kevlar or steel embedded in a layer of elastomeric material.

The annular strap can also be formed by a polymeric layer, for instance of elastomeric material, embedding a fabric of threads having the same resistance in weft and warp.

The fabric of threads having the same resistance in weft and warp, according to an alternative embodiment, could be embedded for instant in a polyurethane material or the like.

Also, according to a further solution, when a high resistance to traction is required, said fabric can have the warp at high resistance and the weft at low resistance, for instance cotton threads.

The polymeric material besides being elastomeric, can be formed by other plastic materials or homogeneous materials constituted by polypropylene or nylon. In particular, in this case the tubular sleeves can be constituted with plastic materials, for instance nylon, stretched in circumferential direction.

The joint can be used in various fields of application and the application of the present joint in the automobile field is particularly advantageous, for instance in place of the Cardan joint constituted by mechanical elements for the connection between the two forks.

The advantage of the use of the joint according to the invention in the automobile field is due to the high flexibility of the element of connection between the supports and to the ability of adapting itself to any oscillation of the vehicle.

According to further solutions the joint of the present invention could be used for instance in the transmissions of motion among mechanical devices in a computer.

Although some preferred embodiments according to the present invention have been described and illustrated, it is understood that the invention includes in its scope all the possible alternative embodiments accessible to a technician of the field, for instance the tension rods of the polygon between the supports can be arranged substantially on a single plane, intending to indicate with the term "substantially" the possibility by the tension rods of slightly moving away from said condition, for instance for assuming the shapes of the edges of a frustum of pyramid.

According to other solutions the tension rods of the joint could be constituted by a plurality of straps placed the one over the other or by a number of annular straps equal to the number of the polygon sides.

The joint could also comprise oversize thicknesses of material at the connections to the rigid forks in order to reduce the damages of abrasion during the operation.

Also the principle of the invention comprises joints in which the sides of the polygon forming the tension rods are of a number greater than the described one and i.e. of the quadrangular or hexagonal polygon; in all the further solutions the angles formed by the edges to constitute the triangular portion of the strap to be anchored to the supports will be less than the cited ones.

These realizations with a greater number of sides permit to distribute high powers on more than one tension rods.

1

WHAT IS CLAIMED:

1) Joint (1) for the transmission of motion from a driving shaft rotating around a first axis to a driven shaft rotating around a second axis, said joint comprising two supports, a driving support (2) and a driven support (3), associated to said shafts, each support comprising at least two arms (5,6,7,8) said joint being characterized by the fact of comprising at least one single element of connection between the arms for the transmission of motion between the shafts constituted in the form of a closed annular strap (4) of flexible material and resistant to traction, said strap being arranged on a plane separating the two supports at a central position to the joint so as to form a polygon whose vertices are the ends of the arms belonging alternatively to the driven and driving supports and whose sides (a, b, c, d) constitute the tension rods for the transmission of motion between the driven shaft and the driving shaft, said tension rods during the operation being equal to the half of the polygon sides, following alternatively sides (a, c) under traction and inactive sides (b, d) and the traction condition exchanging with the inactivity one on varying of the sign of the transmitted torque.

2) Joint as in claim 1, characterized by the fact that said annular strap is obtained by a sleeve of flexible polymeric material and resistant to traction through the two contiguous cuts on planes perpendicular to the axis of the tube.

3) Joint as in claim 1 or 2, characterized by the fact that said annular strap is in the form of rings of elastomeric material embedding reinforcements apt to withstand the tensile strength in a direction parallel to the edges of the ring.

4) Joint as in claim 1, 2 o 3, characterized by the fact that said annular strap comprises means to absorb elastically the variations of torques between the two shafts.

5) Joint as in claim 1, characterized by the fact that said strap, at each end of the arm to which it is connected, is folded upon itself with superimposition of two sides to form an edge (9) directed transversely to the width of the strap, said two sides rotating with respect to the superimposition on the arm around a second edge (10, 11), so as to form a triangle, said second edge (10 or 11) forming an angle $\alpha$ of inclination pre-determined with respect to the first edge (9), said sides projecting from the superimposition to the ends of the arms forming the system of tension rods lying on a single plane.

6) Joint as in claim 5, characterized by the fact that said sides superimposed on said arms and forming in the support said two edges surround a chamfer (13) of corresponding shape, being provided two plates (14, 15) associated and fixed with means of blocking to said chamfering surface of the support.

7) Joint as in claim 1, characterized by the fact of comprising means for constituting a joint with constant angular velocity between the said two driving and driven shafts.

8) Joint as in claim 7, characterized by the fact that said means comprise at least two end supports (20, 21) whose middle sections are on one same first lying plane and an intermediate support (22) between the two furthermost supports lying on a second plane whose middle section is perpendicular to the first lying plane, said intermediate support (22) forming a rigid element of connection of the two equal joints, each of which comprises a polygonal system of sides lying on one same plane.

9) Joint as in claim 1, characterized by the fact of comprising means (18, 19) for avoiding mechanical interferences between the central portions of the two supports in the presence of relative approaching movements between said two shafts.

10) Joint as in claim 1, characterized by the fact that each side of the said polygon is formed with a single closed annular strap.

fig.1

fig.2

fig.3

fig.4

fig.5

fig.6

fig.7

0144756

*fig. 13*

*fig. 14*

*fig. 15*

0144756

20

27  28

fig. 8

26

23  24

22  25

30

30

31  32

fig. 9

fig. 10

45°

37

35  33

36

33

31  35 36 32

34

fig. 12

fig. 11